# EUROPEAN PATENT APPLICATION

(11) **EP 2 653 956 A1**
(43) Date of publication of application: **23.10.2013**
(21) Application number: 12164902.4
(22) Date of filing: 20.04.2012
(51) Int. Cl.: G06F 3/023, G06F 3/033

(54) **Wireless input device**

(71) Applicant: Giga-Byte Technology Co., Ltd., New Taipei City 231 (TW)
(72) Inventor: Lin, Yin Yu, 231 New Taipei City, Taiwan (TW)
(74) Representative: Schwerbrock, Florian

(57) **Abstract**

A wireless input device configured for a computer device is provided. The wireless input device includes a main body and an extension base, wherein the main body has a control unit, an operating unit, a switch, and a first wireless transceiver unit, and the extension base has a processor, a memory unit, a second wireless transceiver unit, and a display. When the switch is triggered, the switch transmits a switch signal to the control unit, and the control unit, according to the operating signal, transmits an adjusting signal to the processor of the extension base in response to the switch signal via the first wireless transceiver unit and the second wireless transceiver unit. The processor changes the parameter(s) in the memory unit according to the adjusting signal and then the changed parameter(s) is stored in the memory unit.

## Description

### BACKGROUND OF THE INVENTION

### Field of the Invention

This invention is related to a wireless input device, and more particularly, to a wireless input device capable of displaying parameters via an extension base and adjusting the parameter at any time.

### Description of the Prior Art

The keyboard and mouse are still the major input peripherals in current computer systems. Due to continuous improvement of operating systems and computer games, more and more controllable and operable functions are available during operating computers or playing games. But the user tends to be in a great bustle when doing many control actions. Thus, the function and the structure of the keyboard and the mouse are continuously improved and developed.

For example, the mouse has been moved from early wheel type to optical type and advanced to laser type. The connection between the mouse and the computer is developed as well from wire type to wireless type. Besides, more functions are added to the mouse.

More and more items are needed to be controlled in computer games that have been well developed in recent years. For some professional game players, playing the roles perfectly is a key factor to win the game. Thus, in case the operation during playing computer games could be simplified effectively, the error probability could be decreased accordingly.

"Macro" is one of the effective methods used to simplify the operation of the computer game. The basic function of macro is carried out in a way of integrating multiple instructions through editing into one single instruction, making it possible to invoke multiple system-dependent operations by simply pressing a single button. So the player can operate the system or play the computer game more easily.

Currently, the method to trigger the macro is setting the shortcut with the macro function to the keyboard or the mouse, while the function of the macro can be modified or adjusted only in the program's main menu. Although use of the macro has provided the user with great convenience, part of the main frame of the display is still occupied on doing such adjustment of the macro. This distracts the user's attention more or less and the computer game may be paused undesirably. Thus, there is a need to monitor the parameter and the macro of peripherals without using a display of the computer device.

### SUMMARY OF THE INVENTION

In view of the problems mentioned above, this invention provides a wireless input device capable of eliminating the inconvenience of the prior art

This invention discloses a wireless input device configured for a computer device. The wireless input device includes a main body and an extension base, wherein the main body includes a control unit, an operating unit electrically connected to the control unit, a switch and a first wireless transceiver unit. The operating unit outputs an operating signal to the control unit when activated, and the control unit outputs a control signal in response to the operating signal. The switch is triggered optionally and outputs a corresponding switch signal to the control unit, and the control unit outputs an adjusting signal in response to the switch signal according to the operating signal. The first wireless transceiver unit is configured to transmit the operating signal or the adjusting signal.

The extension base further comprises a processor, a memory unit electrically connected to the processor, a second wireless transceiver unit and a display. The second wireless transceiver unit receives the control signal or adjusting signal from the first wireless transceiver unit and transmits the received signal to the processor. The memory unit stores at least one parameter. The processor changes the parameter(s) in the memory unit according to the adjusting signal and stores the changed parameter(s) in the memory unit. The process of changing the parameter(s) will be displayed in the display concurrently. Then the user could see the progress of the process clearly and change the parameter(s) more exactly.

The invention is advantageous since the user could change the parameter stored in the extension base directly through the operating unit of the main body and monitor the status of the current parameter(s) through the display of the extension base rather than through the display of the computer device. Therefore, it is unnecessary for the user to interrupt or pause the operation of the computer device in progress, thereby greatly improving the convenience of use thereof.

The characteristics, embodiments and effects, along with the figures as the best mode are described as below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1 illustrates schematically a block diagram of the circuits of the wireless input device in one embodiment of the invention.

Fig. 2 illustrates schematically a three-dimensional view of the wireless input device in one embodiment of the invention.

### PREFERRED EMBODIMENTS OF THE INVENTION

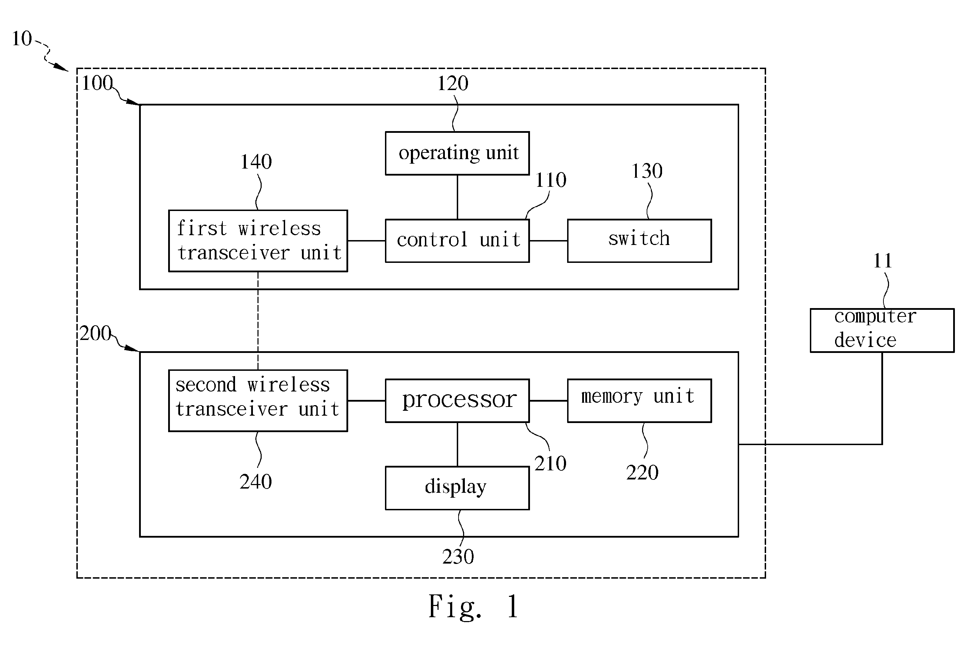

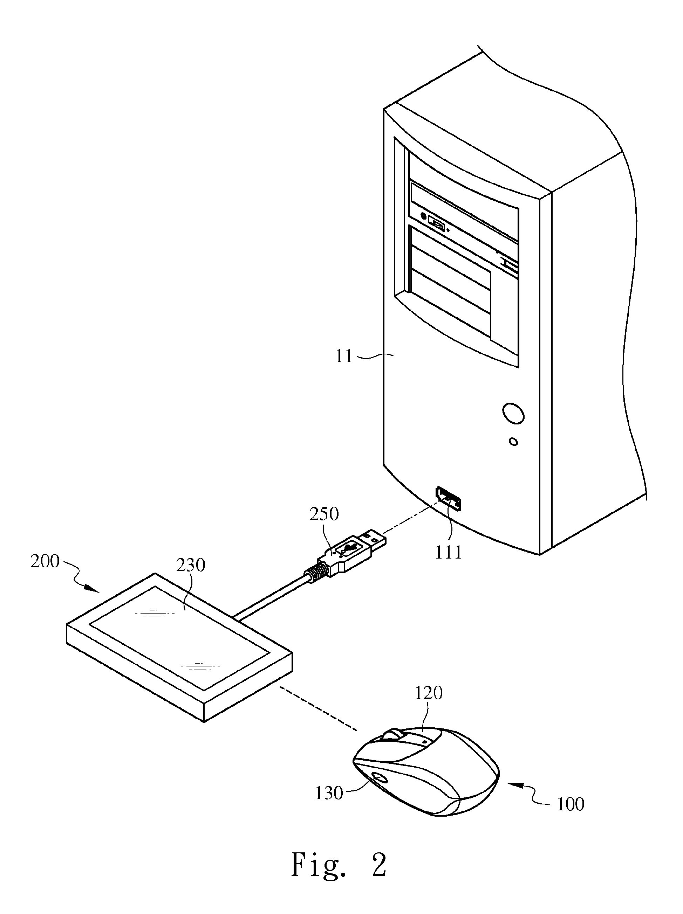

Fig. 1 illustrates a block diagram of a wireless input device 10 in one embodiment of this invention and Fig. 2 is a three-dimensional view of the wireless input device 10.

The wireless input device 10 of this embodiment is configured for a computer device 11. The wireless input device 10 includes a main body 100 and an extension base 200. The main body 100 further includes a control unit 110, an operating unit 120, a switch 130 and a first wireless transceiver unit 140. The extension base further includes a processor 210, a memory unit 220 and a second wireless transceiver unit 240 and a display 230.

The control unit 110 of the main body 100 in this invention is electrically connected to the operating unit 120, the switch 130 and the first wireless transceiver unit 140 respectively. The processor 210 of the extension base 200 is electrically connected to the memory unit 220, the second wireless transceiver unit 240 and a display 230 respectively. The memory unit 220 stores at least one parameter of the wireless input device 10. The display 230 of the extension base 200 is used to display the parameter(s).

The extension base 200 of this embodiment further comprises a connecting interface 250 and the computer device 11 has a connecting port 111 into which the connecting interface 250 is plugged so that the extension base 200 is electrically connected to the computer device 11.

The connecting interface 250 and the connecting port 111 in this embodiment is respectively a male and a female headers of a USB connector. However, they are only illustrative and not limitative to this invention. The connecting interface 250 and the connecting port 111 may be, for example, a bluetooth or an infrared transmit port.

The operating unit 120 in this invention can be a button or a wheel. A mouse device is used as an example to explain the embodiment of this invention. In other words, the control unit 120 disclosed in this embodiment includes a left button, a right button, and a scroll wheel, but this is not a limitation to this invention. The person skilled in this art may also use a trackball, dial, or touch panel or the like as the control unit 120 in this invention.

Furthermore, the wireless input device 10 disclosed in this invention is not limited to the mouse device in the figures. Any wireless input device with the elements disclosed in this invention will fall into the scope of the claims in this invention.

It is to be noted that the parameter(s) in this embodiment refers to a macro, the setting of the button or the parameter(s) of the control unit 110 such as the dpi (Dots Per Inch) value of the operating unit 120, the response time to click the operating unit 120 and other parameters or commands. These examples are just illustrative but not limitative. Besides, the memory unit 220 in this embodiment may be an electrically erasable programmable read-only memory (EEPROM) or a flash memory. The person skilled in this art could use the most suitable type of memory unit 220 in practice as desired and this will not limit the scope of the invention.

The first wireless transceiver unit 140 and the second wireless transceiver unit 240 in this embodiment can be a radio frequency (RF) transceiver or an infrared transceiver, but this is just illustrative and not limitative. Furthermore, the control unit 110 of the main body 100 can be a micro-controller; the processor 210 of the extension base 200 can be a central processing unit (CPU). However, the control unit 110 and the processor 210 disclosed in this embodiment is only illustrative but not limitative to the invention. Other devices containing processing chips of similar functions such as the track control unit may be selected as the control unit 110.

Referring back to Fig. 1 and Fig. 2, when the switch 130 is not triggered but the operating unit 120 of the main body 100 is activated, the operating unit 120 generates an operating signal to the control unit 110. The control unit 110 generates and sends a control signal to the first wireless transceiver unit 140 after receiving the operating signal. Then the control signal is transmitted from the first wireless transceiver unit 140 to the processor 210 through the second wireless transceiver unit 240 of the extension base 200. Finally, the computer device 11 executes the function instructed by the user according to the control signal under the command of the processor 210.

On the other hand, if the switch 130 of the main body 100 is triggered, the switch 130 generates a switch signal and sends it to the control unit 110. When the operating unit 120 of the main body 100 is activated, the operating unit 120 generates an operating signal to the control unit 110. At this time, the control unit 110 receives the switch signal, generates an adjusting signal correspondingly according to the operating signal from the operating unit 120, and sends the adjusting signal to the first wireless transceiver unit 140. Afterwards, the adjusting signal is transmitted from the first wireless transceiver unit 140 to the processor 210 through the second wireless transceiver unit 240 of the extension base 200. The processor 210 changes the parameter(s) stored in the memory unit 220 according to the adjusting signal and stores the changed parameter(s) in the memory unit 220.

Besides, the status of the above steps will be displayed on the screen of the display 230 concurrently for the user to know in real time the whole process and set the parameters more exactly.

Furthermore, when the switch 130 in this embodiment is not triggered, the operating unit 120 is in normal mode. In other words, under this condition, the user is allowed to select a desired function of the computer device 11 by clicking the left button or the right button of the operating unit 120 and to scroll up and down in pages on the screen by using the middle button of the operating unit 120.

When the switch 130 in this embodiment is triggered, the scroll wheel of the operating unit 120 is turned into a set mode in which the scroll wheel functions to change or modify the parameter(s) displayed on the screen of the display 230. For example, rolling the scroll wheel may select a parameter to be changed ,and pressing the scroll wheel may confirm the change of the parameter. Then the changed parameter is stored in the memory unit 220 and the operating unit 120 is changed to the normal mode. During the above process, functions of the left button and the right button of the operating unit 120 are not influenced since they are still required to execute the default functions provided by the computer device 11.

The above process is simply one of the methods of adjusting the parameters which is intended to be illustrative rather than limitative. As an alternative, during the process, the step of pressing the scroll wheel is for changing the parameters temporarily while the operating unit 120 is still in the set mode and does not return to the normal mode yet. The operating unit 120 does not return to the normal mode until the temporarily changed parameters are stored in the memory unit 220 on condition that the switch 130 is triggered again.

When the user needs to change the parameters of the wireless input device, he or she could adjust directly the parameters stored in the memory unit of the extension base by using the operating unit of the main body. It is much more convenient and easier for the user to monitor the current parameter status via the display 230 of the extension base 200.

In many situations such as during playing games, it is inconvenient to set up or change the parameter(s) in the extension base in a conventional way. However, the user could even adjust the parameter(s) without interrupting the operation of the computer device in progress using the wireless input device of the invention, thereby improving the efficiency and convenience of use.

Although the invention has been described with the above embodiments, the person with the ordinary skill in the art can modify the shape, structure, characteristics and quantities of some elements described in the claims of this invention without departing from the spirit of the invention. Accordingly, the scope of the invention will be defined by the appended claims but not by the above detailed descriptions.

### Translation of Fig. 1

- 11: computer device
- 110: control unit
- 111: connecting port
- 120: operating unit
- 130: switch
- 140: first wireless transceiver unit
- 200: extension base
- 210: processor
- 220: memory unit
- 230: display
- 240: second wireless transceiver unit
- 250: connecting interface

## Claims

1. A wireless input device (10) configured for a computer device (11), **characterized by** comprising:
a main body (100) including:
a control unit (110);
an operating unit (120) electrically connected to the control unit (110) and transmitting an operating signal to the control unit (110) when activated, the control unit (110) outputting a control signal in response to the operating signal;
a switch (130) electrically connected to the control unit (110) and transmitting a switch signal to the control unit (110) when the switch (130) is triggered, the control unit (110) outputting an adjusting signal in response to the switch signal according to the operating signal; and
a first wireless transceiver unit (140) electrically connected to the control unit (110) and transmitting the control signal or the adjusting signal; and
an extension base (200) electrically connected to the computer device (11), including:
a processor (210) receiving the control signal and transmitting the control signal to the computer device (11);
a memory unit (220) electrically connected to the processor (210) and storing at least one parameter, the processor (210) changing the parameter according to the adjusting signal and storing the changed parameter in the memory unit (220);
a second wireless transceiver unit (240) electrically connected to the processor (210) and receiving and transmitting the control signal or the adjusting signal from the first wireless transceiver unit (140) to the processor (210); and
a display (230) electrically connected to the processor (210) and displaying the parameter.

2. The wireless input device as recited in claim 1, wherein the extension base (200) further comprises a connecting interface (250) electrically plugged into a connecting port (111) of the computer device (11).

3. The wireless input device as recited in claim 1, wherein the parameter comprises a macro, a setting of buttons and a parameter of the control unit (110).

4. The wireless input device as recited in claim 1, wherein the operating unit (120) is a button or a scroll wheel.

5. The wireless input device as recited in claim 1, wherein the memory unit (220) is an electrically erasable programmable read-only memory or a flash memory.

6. The wireless input device as recited in claim 1, wherein the first wireless transceiver unit (140) and the second wireless transceiver unit (240) are a radio frequency (RF) transceiver or an infrared transceiver.
